# EUROPEAN PATENT SPECIFICATION

(11) **EP 0 300 284 B1**
(45) Date of publication and mention of the grant of the patent: **10.02.1993**
(21) Application number: 88110887.2
(22) Date of filing: 07.07.1988
(51) Int. Cl.: C08L 95/00

(54) **A composition for giving bituminous conglomerates high mechanical characteristics and resistance to high and low temperatures, also by using sludge obtained from the treatment of waste lubricating oil**
Zusammensetzung auf Basis von bituminösen Konglomeraten mit verbesserten mechanischen Eigenschaften und Widerstandsfähigkeit gegen hohe und niedrige Temperaturen unter Verwendung von Schlamm aus der Aufbereitung von Abfallschmieröl
Composition pour améliorer les caractéristiques mécaniques et la résistance aux hautes et basses températures des conglomérats bitumineux, par l'utilisation en plus de la boue obtenue lors du traitement des huiles lubrifiantes résiduaires

(30) Priority: 08.07.1987 IT 2121687
(43) Date of publication of application: 25.01.1989
(73) Proprietor: Fachini, Marco, Dr., Milano (IT)
(72) Inventor: Fachini, Marco, Dr., Milano (IT)
(74) Representative: Haibach, Tino, Dr.

(56) References cited:
- EP-A- 0 009 432
- EP-A- 0 206 015
- EP-A- 0 213 338
- FR-A- 2 374 359

## Description

The bituminous conglomerates usually used for topping roads in locations where very high or very low temperatures can occur do not have the strength characteristics to stand up under these extreme temperatures, with the result that the repeated softening, due to the high temperatures, and/or disassociation of the pavement material, due to the low temperatures, reduce the service life of the road topping.

This not only has grave consequences from the economic point of view, but also seriously impedes the smooth and safe flow of traffic on these roads.

This present invention concerns a composition which, when added to the aforementioned conglomerates in the right proportion, considerably increases their mechanical characteristics and resistance to low and high temperatures. This invented composition also permits the use of sludges obtained from the treatment with solvents of waste lubricating oils; furthermore, this can also be done at ambient temperature, as described later.

The composition which is the object of this invention consists of the following components:

| | |
|---|---|
| - copolymer terpolymer - ethylene propylene (EPDM)(elastomer) | 36 - 40 % |
| - isotactic polypropylene | 20 - 26 % |
| - calcium carbonate | 35 - 43 % |

These indicated proportions are given by way of example, and show the limiting values of the optimum proportions.

The SBR styrene-butadiene composition can be used, in the same proportions, in place of the EPDM copolymer terpolymer.

Furthermore, up to 50% of the contained isotactic polypropylene ( that is, up to a proportion of 10 - 13 %) can be replaced by powdered polythene, without substantially affecting the performance of the above-described composition.

The said components are mixed and pulverized in a standard hammer-type mill. When the hot bituminous conglomerate is being prepared (at 180° C), the mixed and pulverized components are added to the conglomerate in the proportion of 20-25% with respect to the bituminous binder. Therefore, if the amount of binder used is the usual 6%, with respect to the inert components and fillers, the proportional amount of the above-described composition in the final conglomerate mix will be of 1,2 - 1,5 %.

The above-described composition (additive) gives the bituminous conglomerate the kind of physical and mechanical characteristics which make it particularly useful for paving roads in such special localities where very high or very low temperatures can occur.

It has been experimentally demonstrated that a bituminous conglomerate containing the aforesaid additive has the following characteristics:
- resistance to temperatures exceeding 100°C;
- resistance to temperatures as low as -20°C;
- average Marshall stability of about 900.

As mentioned previously, the above described composition can also be used with sludges obtained by treating with solvents waste lubricating oils for the ambient-temperature preparation of bituminous conglomerates, as well as waterproofing and sealing products. This constitutes an alternative to the procedures described in applicant's copending European patent application S.N. 86 10 75 31.5 of June 3, 1986, corresponding to and claiming priority from italian patent application No. 21053 A/85 filed on June 6, 1985.

For the ambient-temperature preparation (not heated), the optimum proportions of the components are in the following ranges:

| | |
|---|---|
| - sludge (obtained as described above) | 24 - 30 % |
| - copolymer terpolymer - ethylene propylene | 18 - 22 % |
| - isotactic polypropylene | 22 - 26 % |
| - calcium carbonate | 26 - 32 % |

Also in this case, the SBR styrene-butadiene compound can be used in place of the copolymer terpolymer, and as half of the isotactic polypropylene can be replaced by powdered polythene.

Ashes from thermoelectric plants - which consist of small hollow spheres - that have a good drying capability, can advantageously be added to this compound in a proportion of about 15 %.

The components of said compound are put in a vessel provided with a blade-type agitator, or in a standard mixer.

The obtained product is in the form of granules (chips) which are 3-5 mm in diameter.

This product can be used in this form or can be milled, in a blade-type mill; this treatment must only be done for a very short time to avoid harmful heating of the product. The resulting product is added to the hot bituminous conglomerate (180°C) being prepared, in an analogous way as is the previously-mentioned sludge-free product, in the proportion of 20-25% with respect to the bituminous binder, thereby obtaining a proportional amount of 1.2-1.5% with respect to the bituminous conglomerate including the inert materials and fillers.

The obvious advantages of the preparation at ambient temperature are the savings in time and energy, which translates into a savings in cost. Furthermore, less complicated equipment is required which, because of the said brief milling treatment, nevertheless permits the obtaining of a product which is sufficiently homogeneous.

The composition described at the beginning of this description can obviously be used for obtaining a hot compound, using sludges obtained by the treatment with solvents of waste lubricating oils, and changing the optimum proportions to the following values:

| | |
|---|---|
| - sludges as previously described | 53 - 55 % |
| - copolymer terpolymer - ethylene propylene | 17 - 23 % |
| - isotactic polypropylene | 17 - 23 % |
| - calcium carbonate | 5 - 7 % |

Also in this case, the SBR styrene-butadiene composition can be used in place of the copolymer terpolymer, and up to as much as half of the isotactic polypropylene can be substituted with powdered polythene.

The aforesaid components are processed in a mixer with a diathermal-oil sheath at 180°-190°C. After the components have been thoroughly mixed together, the pieces are unloaded, appropriately cooled, and put into a blade-type mill to be pulverized. The pulverizing can be done more thoroughly in the hot process than in the one carried out at ambient temperature.

The final product is added to the mix used for the road-topping operations in the proportions of 20-25% with respect to the bituminous binder, and can also be used for waterproofing and sealing operations.

It was verified a softening point for both the cold- and hot-produced compound varied between 180° and 185°C.

The bituminous conglomerates obtained with the above described processes have also given very good results in the mechanical tests performed. These results are as follows:

| | |
|---|---|
| - penetration index | + 5 |
| - Marshall stability | 1200 kg (approx.) |
| - Marshall creep | 3,85 mm (approx.) |
| - Marshall stiffness | 130 (approx.) |

## Claims

1. A process of utilizing sludges derived from the treatment of waste lubricating oils (with solvents) for preparing bituminous conglomerates for road-paving, waterproofing and sealing purposes with high resistance to high and low temperatures and high mechanical characteristics, said process including preparing a composition comprising EPDM copolymer terpolymer - ethylene propylene (as an elastomer component) and isotactic polypropylene (as a hardening component), mixed with said sludges, said mixture being useful for preparing said bituminous conglomerates for said purposes, **characterized** in that
- calcium carbonate is added as a further component of said composition, and
- said sludges and said composition are mixed in such proportions that the mixture contains
| | |
|---|---|
| - sludge | 24 - 30 % |
| - EPDM copolymer terpolymer ethylene propylene (elastomer compound) | 18 - 22 % |
| - isotactic polypropylene (hardening component) | 22 - 26 % |
| - calcium carbonate | 26 - 32 % |

2. The process as claimed in claim 1, modified in that
SBR styrene-butadiene is used as said elastomer component in said composition instead of said EPDM copolymer terpolymer - ethylene propylene.

3. The process as claimed in claims 1 or 2, modified in that
said isotactic polypropylene is partially replaced by pulverized polythene, in a proportion up to as much as 50 % of said isotactic polypropylene hardening component.

4. The process as claimed in any of the preceding claims, **characterized** in that
ashes obtained from thermoelectric plants are added to said composition or said composition-sludge-mixture.

5. The process as claimed in any of the preceding claims, **characterized** in that
it is carried out at ambient temperatures.

## Patentansprüche

1. Verfahren zur Verwendung von aus der Aufbereitungsbehandlung von Abfallschmierölen (mit Lösungsmitteln) erhaltenen Schlämmen, zur Herstellung bituminöser Konglomerate für Zwecke der Straßendeckenherstellung, Wasserabdichtungsimprägnierung und Abdichtung, mit hoher Beständigkeit gegen hohe und niedrige Temperaturen und hochwertigen mechanischen Eigenschaften, wobei das Verfahren die Herstellung einer Zusammensetzung umfaßt, welche EPDM-Copolymerterpolymer-äthylenpropylen (als Elastomerkomponente) und isotaktisches Polypropylen (als Härtungsmittelkomponente), gemischt mit den genannten Schlämmen, aufweist, wobei das genannte Gemisch sich zur Herstellung der genannten bituminösen Konglomerate für die angegebenen Zwecke eignet,
dadurch gekennzeichnet, daß
- Calciumcarbonat als eine weitere Komponente der genannten Zusammensetzung zugegeben wird, und
- die genannten Schlämme und die genannte Zusammensetzung in solchen Anteilen gemischt werden, daß das Gemisch enthält
| | |
|---|---|
| - Schlamm | 24 - 30 % |
| - EPDM-Copolymerterpolymer-äthylenpropylen (Elastomerverbindung) | 18 - 22 % |
| - isotaktisches Polypropylen (Härtungsmittelkomponente) | 22 - 26 % |
| - Calciumcarbonat | 26 - 32 %. |

2. Das Verfahren nach Anspruch 1, dahingehend modifiziert, daß als die genannte Elastomerkomponente in der genannten Zusammensetzung anstelle von EPDM-Copolymerterpolymer-äthylenpropylen SBR-Styrolbutadien verwendet wird.

3. Verfahren nach den Ansprüchen 1 oder 2, in der Modifikation, daß das genannte isotaktische Polypropylen teilweise durch pulverisiertes Polythen ersetzt wird, in einem Anteil bis zu 50 % der genannten isotaktischen Polypropylen-Härtungsmittelkomponente.

4. Verfahren nach einem der vorhergehenden Ansprüche, dadurch gekennzeichnet, daß aus thermoelektrischen Anlagen erhaltene Aschen der genannten Zusammensetzung oder dem genannten Zusammensetzungs-Schlamm-Gemisch zugegeben werden.

5. Verfahren nach einem der vorhergehenden Ansprüche, dadurch gekennzeichnet, daß es bei Umgebungstemperaturen ausgeführt wird.

## Revendications

1. Processus d'utilisation des boues obtenues à partir du traitement d'huiles lubrifiantes résiduaires (avec des solvants) pour préparer des conglomérats bitumineux dans des buts de revêtement routier, d'imperméabilité à l'eau et d'étanchéité présentant une résistance élevée à des températures haute et basse et des caractéristiques mécaniques améliorées, ledit processus comportant l'étape consistant à préparer une composition comprenant un propyléthyléthylène - copolymère terpolymère EPDM (en tant que composant élastomère) et un polypropylène isotactique (en tant que composant de durcissement), mélangés auxdites boues, ledit mélange étant utile pour préparer lesdits conglomérats bitumineux pour lesdits buts, caractérisé en ce que
- du carbonate de calcium est ajouté en tant que composant supplémentaire de ladite composition, et
- lesdites boues et ladite composition sont mélangées en des proportions telles que le mélange contient :
| | |
|---|---|
| . boues | 24 à 30 % |
| . Propyléthylène copolymère terpolymère EPDM (composé élastomère) | 18 à 22 % |
| . Polypropylène isotactique (composant de durcissement) | 22 à 26 % |
| . Carbonate de calcium | 26 à 32 % |

2. Processus selon la revendication 1, modifié en ce que
du styrène-butadiène SBR est utilisé en tant que dit composant élastomère dans ladite composition au lieu du propyléthylène - copolymère terpolymère EPDM.

3. Processus selon la revendication 1 ou 2, modifié en ce que
ledit polypropylène isotactique est partiellement remplacé par du polythène pulvérisé, en une proportion allant jusqu'à 50 % dudit composant de durcissement en polypropylène isotactique.

4. Processus selon l'une quelconque des revendications précédentes, caractérisé en ce que
des cendres obtenues à partir de centrales thermoélectriques sont ajoutées à ladite composition ou au mélange composition/boue.

5. Processus selon l'une quelconque des revendications précédentes, caractérisé en ce qu'il est réalisé à des températures ambiantes.
